# EUROPEAN PATENT SPECIFICATION

(11) **EP 0 616 619 B1**
(45) Date of publication and mention of the grant of the patent: **01.07.1998**
(21) Application number: 92903557.4
(22) Date of filing: 13.12.1991
(51) Int. Cl.: C08J 9/00, C08K 5/02, C08K 5/03

(54) **FIRE RESISTANT ALKENYLAROMATIC FOAMS**
FLAMMWIDRIGE ALKENYLAROMATISCHE SCHÄUME
MOUSSES IGNIFUGES D'ALCENYLE AROMATIQUE

(43) Date of publication of application: 28.09.1994
(73) Proprietor: THE DOW CHEMICAL COMPANY, Midland, Michigan 48674 (US)
(72) Inventor: STOBBY, William, G., Johnstown, OH 43031 (US); SUH, Kyung, W., Granville, OH 43023 (US)
(74) Representative: Casalonga, Axel
(86) International application number: US9109257
(87) International publication number: WO9312163

(56) References cited:
- CHEMICAL ABSTRACTS, 95(12):9888e, see entire document.
- CHEMICAL ABSTRACTS, 97(4):24889a, see entire document.
- CHEMICAL ABSTRACTS, 97(8):56865f, see entire document.

## Description

The present invention relates to fire retardant or fire resistant alkenylaromatic foams.

There is a need to improve the fire retardant properties of plastic foams. Various steps have been taken to improve the fire retardant properties of thermoplastic polymers in order to make them slower to ignite and to retard flame propagation. Thermoplastic polymers can be rendered flame retardant by compounding with fire retardant additives, including halogenated organic compounds and inorganic compounds such as antimony oxide. Brominated organic compounds have been used in both foamed and nonfoamed alkenylaromatic polymer compositions. "Fire Resistance Finishing of Thermoplastics as Represented by the Example of Polystyrene," CA87 (24):185432e, discloses an unfoamed polystyrene composition containing as flame retardants hexabromocyclododecane, nonabromobiphenyl or decabromodiphenyl ether in combination with antimony oxide. "Heat And Flame Resistant Thermoplastic Polymers," CA81 (12):64729z, discloses a nonfoamed, impact resistant polystyrene having incorporated therein hexabromobenzene, tribromophenyl allyl ether and hexabromocyclododecane.

While effective in improving flame retardancy, the incorporation of flame retardant additives into thermoplastic polymer compositions is associated with a variety of problems. Such problems include obtaining homogeneous blending of the matrix resin with the fire retardant additives. Failure to obtain a homogeneous blend can contribute to poor fire retardant ratings. There is a further problem in that fire retardant additives tend to degrade the appearance of the product and can negatively affect physical properties such as impact strength, particularly at higher levels of such additives. In nonfoamed polymers, the bromine content is typically quite high, for example, in excess of 5 parts of bromine per 100 parts of alkenylaromatic polymer.

In foamed alkenylaromatic polymers, the degree of bromine loading has to be significantly lower to avoid detrimentally impacting the structural qualities and skin quality of the foam. It is common to use only brominated aliphatics in foamed polystyrenes, with hexabromocyclododecane (HBCD) being the most commonly used foamed alkenylaromatic polymer fire retardant. Following current industry practice, the use of brominated aliphatic compounds as fire retardants for thermoplastic polymer foams requires an increase in the fire retardant level as the thickness of the foam increases in order to meet industry test standards such as ASTM E-84, discussed in greater detail below.

The increased level of fire retardant additives results in higher material costs for the product and/or difficulty in maintaining an acceptable appearance of the foam outer surfaces or skins. Skin quality can be preserved by going to a higher foam density, which is accompanied by an increase in raw material costs. There is a need for more efficient fire retardant systems for use with thermoplastic alkenylaromatic polymer compositions. Additionally, because conventional blowing agents, particularly physical blowing agents such as halogenated hydrocarbons, are considered to be environmentally detrimental, there is a need for flame retardant systems which can function with minimal corrosive effects in pristine expansion systems in which water is at least a component.

In the present invention, it has been surprisingly found that the fire resistant performance of alkenylaromatic polymer foams, especially such foams having a final thickness of 2.5-10 cm, can be strikingly improved.

This can be done by adding to 100 parts by weight of at least one alkenylaromatic thermoplastic homo-, co- and/or interpolymers prior to extrusion into a foam from 0.1 to 2 parts by weight bromine provided by at least one first brominated organic compound formed by at least one brominated aliphatic compound having at least one hydrogen atom attached to a carbon atom which is adjacent to a carbon atom containing at least one bromine atom and volatilizing at a temperature below 240°C, and 0.5 to 3 parts by weight bromine provided by a tetrahalophthalate ester, said second brominated organic compound having both a lower volatility and a higher thermal stability than the brominated aliphatic compound.

In a more preferred aspect of the invention, from about 0.001 to about 5 parts of at least one melt flow promoter per 100 parts alkenylaromatic polymer are incorporated into the system in addition to the brominated aliphatic compound and the tetrahalophthalate ester. This additional ingredient makes it possible to use less of the first brominated aliphatic compound in order to achieve the same flame retardant results. This has the important advantage of lowering the corrosiveness of the polymer system, which can be an adverse factor during polymer processing, especially when using water as a blowing agent.

These and other objects, advantages and features of the invention can be more fully understood and appreciated by reference to the description of the preferred embodiment.
Fig. 1 is a schematic representation of the effect of temperature upon the release of HBr from various brominated organic flame retardant systems; and
Fig. 2 is a schematic representation of an Arrhenius equation showing the effect of temperature upon the bromine loss from various brominated organic flame retardant systems.

The invention will be described in detail with respect to the preferred embodiment, which is directed to foamable alkenylaromatic polymeric compositions and to shaped products produced from such compositions.

The alkenylaromatic polymers which are employed in the present invention are well-known articles of commerce. Alkenylaromatic polymers include homopolymers of alkenylaromatic monomers, copolymers of two or more alkenylaromatic monomers, and interpolymers of at least one alkenylaromatic monomer and at least one nonalkenylaromatic monomer which is interpolymerizable with alkenylaromatic monomers. The alkenylaromatic monomers have the characteristic formula CH₂ = CX-Ar, wherein Ar is an aromatic radical, including various alkyl and halo-ring-substituted aromatic units of from 6 to 10 carbon atoms and X is hydrogen or an alkyl group having from 1 to 4 carbon atoms. Representative alkenylaromatic monomers include styrene, o-methylstyrene, m-methylstyrene, p-methylstyrene, ethylstyrene, dimethylstyrene, alpha-methylstyrene, p-methoxystyrene, p-chlorostyrene, 2,4-dichlorostyrene, 2,5-dichlorostyrene, p-bromostyrene, alpha-methyl-p-methylstyrene, p-isopropylstyrene, vinylnaphthalene, vinylanthracene, indene, p-cyanostyrene and the like.

Exemplary of nonalkenylaromatic monomers which can be polymerized with alkenylaromatic monomers are unsaturated nitriles such as acrylonitrile, methylacrylonitrile, ethylacrylonitrile, and mixtures thereof. Other nonvinyl monomers which are copolymerizable with alkenylaromatic monomers and which are suitable for use in the present invention are alpha/beta-unsaturated monobasic acids and derivatives thereof, such as acrylic acid, methacrylic acid, ethylacrylate, butylacrylate, 2-ethylhexylacrylate and the corresponding methacrylate esters thereof, such as methacrylate, acrylamide, methacrylamide, maleic anhydride, N-phenylmaleimide, dimethylmaleate, diethylmaleate, dibutylmaleate, the corresponding fumarates and the like.

Currently, it is preferred that the alkenylaromatic resins contain at least 50 percent of at least one alkenylaromatic monomer, and it is currently preferred that the alkenylaromatic resins contain at least 50 weight percent styrene. Currently preferred alkenylaromatic resins include polystyrene and styrene-alpha-methylstyrene copolymers. The alkenylaromatic polymers preferably have molecular weights of at least 50,000, and more preferably in the range from 100,000 to 500,000.

The blowing or expanding agents which are employed in the expandable alkenylaromatic polymer compositions of this invention include those which have a boiling point lower than the softening point of the expandable polymer composition. The expanding agents include carbon dioxide; nitrogen; aliphatic hydrocarbons such as propane, butane, isobutane, pentane, neopentane, isopentane, hexane, and butadiene; aliphatic cyclohydrocarbons such as cyclobutane, cyclopentane and cyclohexane; and halogenated hydrocarbons such as ethylchloride, methylchloride, methylene chloride, dichlorofluoromethane, chlorotrifluoromethane, dichlorodifluoromethane, chlorodifluoromethane trichlorofluoromethane, 1-chloro-1,1-difluoroethane, 1,1,1,2-tetrafluoro-2-chloroethane and 1,1,1,2-tetrafluoroethane. The expanding agents are typically employed in amounts in the range from 1 to 30 percent by weight of the total expandable polymer materials. When employing conventional chemical or physical blowing agents, the halogenated hydrocarbons are preferred expansion agents with dichlorodifluoromethane, 1-chloro-1,1-difluoroethane and 1,1,1,2-tetrafluoroethane being particularly preferred.

Also, and preferably, the binary and tertiary flame retardant systems of this invention are suitable for use with blowing agent systems which include water. These pristine expansion systems are developing as replacements for the current conventional chemical and physical blowing agents because they have a lesser impact on the environment and are less hazardous to personnel. The tertiary flame retardant systems (those containing melt flow promoters) are especially suited for use with pristine expansion systems, especially those comprising water, nitrogen and carbon dioxide, perhaps because the tertiary systems enable a reduction in the amount of the more volatile brominated aliphatic flame retardant component and tend to otherwise reduce any tendency toward the formation of corrosive byproducts.

The flame retardant systems of the present invention comprise a blend of bromine-containing compounds consisting essentially of at least one brominated aliphatic compound which has at least one hydrogen on a carbon atom adjacent to a bromine-containing carbon atom and at least one tetrahalogenated phthalate ester compound, which is less volatile and more heat stable in comparison to the brominated aliphatic compound. Optionally, but preferably, the fire retardant systems of the invention include at least one melt flow promoter.

As the first brominated aliphatic compound, substantially any brominated aliphatic compound which has heretofore been employed as a flame retardant for resin compositions can be employed in the practice of this invention, providing that such compounds (1) have at least one hydrogen atom attached to a carbon atom which is adjacent to a carbon atom containing at least one bromine atom and (2) will volatilize at a temperature below 240°C. Representative brominated aliphatic compounds include hexabromocyclododecane; tris(2,3-dibromopropyl)phosphate; tetrabromocyclooctane; pentabromochlorocyclohexane; 1,2-dibromo-4-(1,2-di-bromoethyl)cyclohexane; hexabromo-2-butene; and 1,1,1,3-tetrabromononane. Particularly preferred brominated aliphatic flame retardant compounds include hexabromocyclododecane and its isomers, pentabromocyclohexane and its isomer, and 1,2-dibromo-4-(1,2-dibromo-ethyl)cyclohexane and its isomers; with hexabromocyclododecane being currently the most preferred compound.

The second component of the fire retardant systems of the invention must meet two criteria: (1) the flame retardant must be more thermally stable and (2) have a volatilization temperature which is higher than the brominated aliphatic compound with which it is combined. As used herein, volatilization temperature is defined as the temperature at which 5 weight percent of a sample has been lost using thermogravimetric analysis (TGA) at a ramp rate of 10°C/minute. Thermal stability is defined as the potential of a brominated compound when compounded into polystyrene to be able to reduce the molecular weight of polystyrene at a temperature of 250°C. Suitable compounds preferably have a volatilization temperature in the range of 160-460°C with compounds having a volatilization temperature in excess of 240°C being particularly preferred.

Brominated compounds wherein the bromine is bonded to unsaturated carbon atoms, aromatic ring structures or aliphatic carbon atoms where there is no available proton on a neighboring aliphatic carbon atom (neopentyl. structures) have excellent thermal stability because they do not have the potential to reduce the molecular weight of polystyrene at 250°C. The ability of thermally stable, low temperature volatile compounds to function as second component fire retardant additives is related to the solubility of the compound in the host polymer matrix. The more soluble the compound, the slower is its bromine release rate from the host polymer melt.

The melt flow modifiers which are employed in the practice of the invention are compounds which, by themselves, are capable of reducing the molecular weight of the host alkenylaromatic polymer composition. In addition, they are also able to assist in the degradation of the aliphatic fire retardant additive by providing a source of reactive radicals which will abstract protons off the aliphatic flame retardant molecule and subsequently release the bromine radical from the aliphatic fire retardant additive. Good solubility of the melt flow modifier in the host polymer is desired to achieve the best performance. Measurements of molecular weight loss of the alkenylaromatic polymer, for example, polystyrene, with the melt flow modifier alone is a good indication of the effectiveness of such compounds to function as melt flow modifiers. These compounds contribute to more effective ignition resistance like properties of alkenylaromatic polymer compositions by promoting the flowability of the polymer melt during flammability tests. Thus, the melt flow modifiers enhance the capability of the flame retardant systems and enable one to obtain the same level of flame retardancy with a lesser amount of the saturated brominated aliphatic flame retardants. Suitable melt flow modifiers include 2,3-dimethyl-2,3-diphenylbutane; bis(alpha-phenylethyl)sulfone; 1,1'-diphenylbicyclohexyl; 2,2'-dimethyl-2,2'-azobutane; 2,2'-dichloro-2,2' -azobutane; 2,2'-dibromo-2,2'-azobutane; 2,2'-dimethyl--2,2'-azobutane-3,3',4,4'-tetracarboxylic acid; 1,1'-diphenylbicyclopentyl; 2,5-bis(tribromomethyl) -1,3,4-thiadiazole; 2-(bromophenyl-5-tribromophenyl) -1,3,4-thiadiazole; dioctyl tin maleate; and dibutyl tin maleate.

The second brominated organic compound is the tetrahalophthalate ester. Useful tetrahalophthalate esters are taught in U.S. Patent No. 4,762,861. Useful tetrahalophthalate esters include those of the following formula: 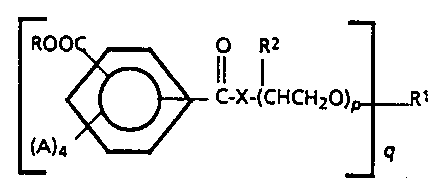 wherein:
(a)the ring can have all possible isomeric arrangements;
(b)R is selected from the group consisting of hydrogen, an alkyl or substituted alkyl of 1 to 30 carbons, hydroxyalkyl of 2 to 20 carbons; polyhydroxyalkyl of 3 to 10 carbons; and 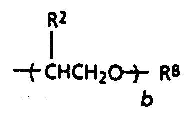 where R⁸ is an alkyl or substituted alkyl of 1 to 18 carbons, and b is 1 to 50;
(c)R¹ is selected from the group consisting of hydrogen, an alkyl or substituted alkyl of 1 to 30 carbons, alkenyl or substituted alkenyl of 2 to 22 carbons, 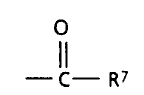 where R⁷ is an alkyl of 1 to 18 carbons, a polyhydroxyalkyl of 3 to 12 carbons; 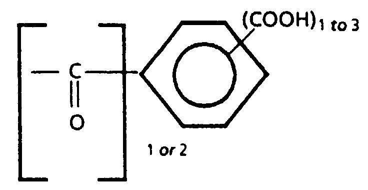 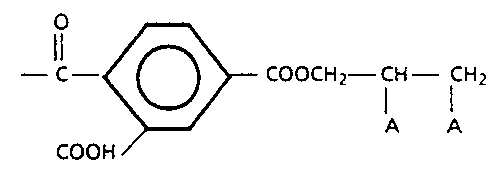 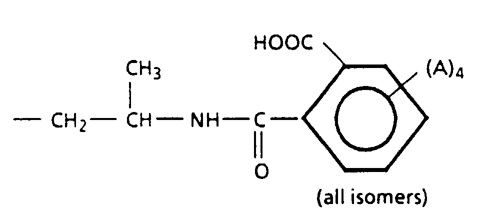 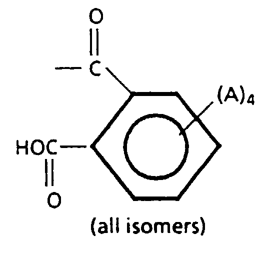 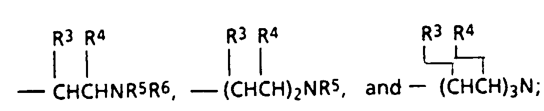
(d)R² is independently selected from the class consisting of H and CH₃-;
(e)R³, R⁴, R⁵, and R⁶ are independently selected from the class consisting of H and an alkyl of 1 to 18 carbons;
(f)p is an integer of 0 to 50;
(g)q is an integer of 1 to 6;
(h)X is selected from 0 (oxygen) or NH; and
(i)A is selected from Cl (chlorine) or Br (bromine), whereby at least one A is not Cl.

The tetrahalophthalate ester is preferably one wherein R is an alkyl or substituted alkyl of 1 to 10 carbons, A is Br, X is oxygen, p is 0 to 20, and q is 1 to 6. More preferably R is

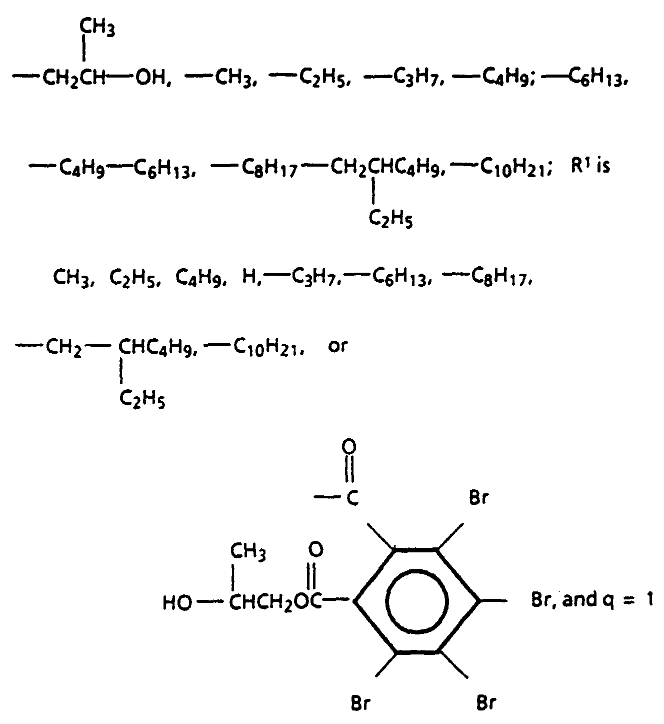

In forming the flame retardant compositions of the present invention, the first aliphatic brominated compound will be employed in an amount sufficient to provide a bromine content in the range of 0.1 to 2, preferably 0.2 to 1.2, parts by weight per 100 parts by weight of alkenylaromatic resin. Henceforth, the amounts of flame retardant materials will be referred to as PHR (parts per hundred parts of resin). The second component, that is, the second brominated organic compound which has a lower volatility and a greater heat stability than the brominated aliphatic compound, is employed in an amount sufficient to provide a bromine content in the range of 0.5 to 3 PHR, preferably 0.8 to 3 PHR, and most preferably 1.0 to 2.25 PHR. In this regard, volatility is defined by the temperature at which a 5 weight percent loss is observed using thermogravimetric analysis at a ramp rate of 10°C/min. As indicated, the brominated aliphatic compounds representing the first component will typically have volatility values below 240°C with the lesser volatility materials (second brominated organic compound) having a volatilization temperature in the range of at least 160°C and preferably about 240°C. The melt flow additives which are preferably employed in the compositions of this invention will be present in the range from about 0.01 to 5 PHR, preferably 0.05 to 1.

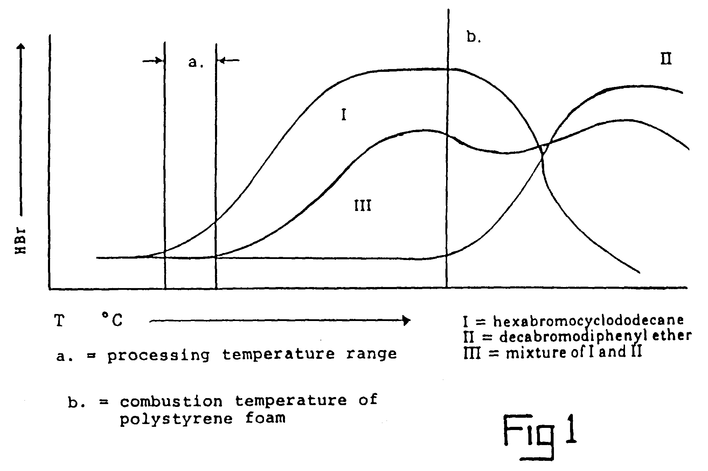

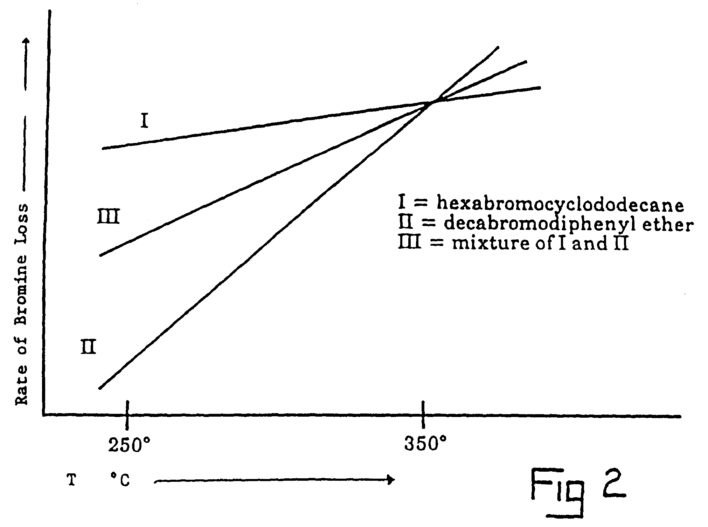

The practical effect of the flame retardant systems of this invention is similar to that shown schematically in Figs. 1 and 2. Fig. 1 is an idealized representation of the release of hydrogen bromide from polymeric compositions containing one or more brominated fire retardant additives as a function of polymer temperature. Fig. 2 is an Arrhenius plot of the rate of bromine loss from bromine-containing compounds as a function of temperature. The more volatile hexabromocyclododecane is partially consumed at polymer processing temperatures and is consumed or volatilized more quickly by the flame. As polymer temperature increases, the release of hydrogen bromide becomes sufficiently rapid that the flame retardant may become totally consumed before it can successfully extinguish the flame. The problem is exacerbated in foams of more than 2.5 cm thickness. When the foam is ignited, the fire must first melt vertically through the foam from front to back before melting in the horizontal direction can remove the molten polymer from the foam. Thus, higher levels of flame retardant are believed necessary due to the longer exposure time of the foam to the flame. The longer contact time either consumes or volatilizes away a greater portion of the flame retardant. However, the use of a more heat stabile, less volatile flame retardant in combination with the more volatile hexabromocyclododecane permits release of hydrogen bromide from the more volatile compound during the initial contact with the flame while retaining the more heat stable, less volatile flame retardant to function at a later stage of flame propagation when the polymer temperature is higher, particularly in the case of foams in excess of 2.5 cm thickness. By itself, the more heat stable, less volatile flame retardant additive may be so heat stable that its decomposition may not take place until a significant amount of the host polymer is consumed.

For commercial applications, foamed insulation materials must pass the ASTM E-84-80 "tunnel test" which is defined as the standard test method for surface burning characteristics of building materials. The test is conducted in a tunnel-shaped enclosure which is 0.3 m x 0.6 m by 7.6 m (height x width x length). The foam is attached to the ceiling and a torch is placed under the foam at one end of the tunnel. The test is applicable to any type of building material that, by its own structural quality or the manner in which it is applied, is capable of supporting itself in position or may be supported in the test furnace to a thickness comparable to its recommended use. The purpose of the test is to determine the comparative burning characteristics of the material under test by evaluating the flame spread rate over its surface when exposed to a test fire and to thus establish a basis on which surface burning characteristics of different materials may be compared, without specific considerations of all the end use parameters that might affect the surface burning characteristics. Smoke density as well as the flame-spread rate is recorded in the test. However, there is not necessarily any relationship between the measurements. The standard test is used to measure and describe the properties of materials, products or assemblies in response to heat and flame under controlled laboratory conditions and is not used to describe or appraise the fire hazard or fire risk of materials, products or assemblies under actual fire conditions. However, results of the test may be used as elements of a fire risk assessment which takes into account all of the factors which are pertinent to an assessment of the fire hazard of a particular end use.

The ignition resistance-like properties of the flame retardant alkenylaromatic compositions of this invention were tested by a modified version of the ASTM E-84 tunnel test. The modified test is designed to determine the extinguishment time in seconds of thermoplastic foams. In this test, a natural gas or propane flame is positioned under one end of a horizontally positioned sample of plastic foam for 1.5 seconds. The sample measures 15.2 cm by 0.64 cm by 2.5 cm. A timer is activated when the burner flame is withdrawn and the timer is stopped when the flame extinguishes. The average test time of six samples is given and a maximum value for this test is 25 seconds. Passing criteria is a test time equal to or less than 3.0 seconds with a standard deviation equal to or less than 1.0 second. In these small-scale laboratory tests, bead foam is used because, to pass this modified test, bromine levels similar to the required bromine levels for 5.1 cm to 6.4 cm thick extruded polystyrene foams are required in order to pass the ASTM E-84 test.

The following examples although not belonging to the invention will further illustrate this application. The parts specified in the examples are parts by weight. Example I describes the procedure for preparing extruded polystyrene foams containing different flame retardant systems and the flammability test procedure. Examples II-IV report the results of flammability tests of particular flame retardant systems.

### Example I Production of Trichlorofluoromethane Imbibed Polystyrene Beads

Trichlorofluoromethane imbibed polystyrene beads were prepared using a Brabender extruder containing a 3.2 cm screw with a Koch mixer attached at the end of the screw. The temperature for the extrusion system was:

| Barrel Zones | | | | Koch Mixer Zones | | | Die |
|---|---|---|---|---|---|---|---|
| 1 | 2 | 3 | 4 | 1 | 2 | 3 | |
| 170°C | 180°C | 190°C | 190°C | 180°C | 160°C | 140°C | 132°C |

The preblended mixture of polystyrene and additives was fed into the extruder feed port at a rate of 12 kg/hr and the trichlorofluoromethane was fed in at Barrel Zone 4 at 11 weight percent. The die had an opening of 4.2 mm (1/6 inch) and the polymer strand was immediately quenched with water at room temperature. The polymer strand was chopped into pellets. The pellets were immersed in preheated water at 60°C for 40 minutes and dried overnight to improve cell nucleation during first expansion.

### Production of Molded Bead Foam

The imbibed beads were first expanded to a bulk density between 27 kg/m³ and 37 kg/m³ by placing 30 g of beads into a screen basket, already suspended inside a covered cooking pot containing, at the bottom, a 5.1 cm layer of continuously boiling water. First expansion time was between 30 and 40 seconds. A bulk density of 32 kg/m³ was aimed for. The expanded beads were removed and allowed to stand overnight before molding. Before molding, the beads were passed through a sieve having 0.64 cm opening.

Into a bead foam mold measuring 16 cm x 16 cm x 2.5 cm, 23.0 g of beads were evenly distributed. 55.1 kPa (8 psi) steam was injected into the filled mold for 105 seconds. Steam supply was shut off and cooling water applied to the exterior surface of the mold. Foaming conditions were varied as needed to achieve a molded bead foam with smooth surfaces with a minimum of small voids between expanded beads. Molded bead foams were allowed to age 48 hours at 72°C/50 percent relative humidity before measuring density and performing the modified flammability test.

### Flammability Testing of Molded Bead Foams

The modified flammability test is designed to determine the extinguishment time in seconds of polystyrene or other thermoplastic foams. A natural gas or propane flame is positioned under one end of a horizontally positioned sample of plastic foam for 1.5 seconds. The sample measures 15 cm x 0.63 cm x 2.5 cm. A timer is activated when the burner flame is withdrawn and the timer is stopped when the flame extinguishes. The average test time of 6 samples is given and a maximum value for this test is 25 seconds. Passing criteria is a test time of ≤3.0 seconds and a standard deviation of ≤1.0 second. Preferred foams meet these criteria under the modified flammability test.

### Example II Preparation of a Vinyl Aromatic Polymeric Foam

Formulations were prepared following the procedure of Example I to evaluate the effect of various levels of bromine, where the only fire retardant additive is hexabromocyclododecane, hereafter referred to as HBCD on modified flammability test results.

Table 1 presents the formulation and results of increasing the level of HBCD in molded polystyrene bead foam. A bromine level of 1.9-2.0 weight percent is needed to meet the passing criteria. Extruded polystyrene foam, Sample G, at 0.74 weight percent HBCD and 36.8 kg/m³, gives a modified flammability test time of 2.2 seconds. The extruded foam was prepared by changing blowing agents and adding 0.03 parts talc and not using the water cooling bath to chill the polymer strand. Hereinafter, the modified flammability test will be referred to as MFT. In all of the examples, the term DEV refers to the percent deviation in MFT results.

**Table 1**

| SA# | PS¹ (g) | HBCD (g) | CaSt (g) | CFC-11² (g) | Foam³ Density (kg/m³) | Bromine (wt %) | MFT (sec) | DEV (sec) |
|---|---|---|---|---|---|---|---|---|
| A | 938 | 62 | 0.7 | 110 | 35.4 | 1.15 | 13.8 | 7.7 |
| | | | | | 28.3 | 1.12 | 7.9 | 8.8 |
| B | 907 | 93 | 0.7 | 110 | 36.8 | 1.26 | 4.1 | 2.2 |
| | | | | | 29.1 | 1.27 | 3.4 | 1.8 |
| C | 875 | 125 | 0.7 | 110 | 34.9 | 1.76 | 3.1 | 2.8 |
| | | | | | 28.5 | 1.78 | 3.2 | 1.7 |
| D | 843 | 157 | 0.7 | 110 | 34.9 | 2.14 | 2.0 | 0.3 |
| | | | | | 28.2 | 2.18 | 2.2 | 0.4 |
| E | 810 | 190 | 0.7 | 110 | 35.7 | 2.48 | 1.9 | 0.5 |
| | | | | | 28.2 | 2.50 | 1.4 | 0.3 |
| F | 778 | 222 | 0.7 | 110 | 34.9 | 3.23 | 1.8 | 0.4 |
| | | | | | | | | |
| | | | CFC-12/MeCl⁴ | | 28.3 | 3.17 | 1.5 | 0.2 |
| G | 965 | 34 | 0.7 | 110 | 36.8 | 0.74 | 1.9 | |

| | | | | | | | | |
|---|---|---|---|---|---|---|---|---|
| ¹ Polystyrene Mw=210M, Mn=62M, melt index = ? | | | | | | | | |
| ² Trichlorofluoromethane | | | | | | | | |
| ³ Two different densities were run to demonstrate MFT insensitivity to small density variations between 27 kg/m³ to 37 kg/m³ | | | | | | | | |
| ⁴ 50/50 mixture by weight of dichlorodifluoromethane and methyl chloride | | | | | | | | |

Disrupting the continuity of the cell structure in extruded polystyrene foam by using molded bead foam reduces the ability of the sample to melt away from the ignition source. Thus, molded bead foams can be used to model the flammability performance of thicker extruded polystyrene foam using a small-scale flammability test.

### Example III

Formulations were prepared following the procedure of Example I, employing a combination of brominated diphenyl oxide and hexabromocyclododecane (HBCD). The diphenyl oxides employed were pentabromodiphenyl oxide (PBDPO), octabromodiphenyl oxide (OBDPO) and decabromodiphenyl oxide (DBDPO).

Table 2 presents the formulations and results for blends of brominated diphenyl oxides and HBCD. MFT test results indicate that combinations of the brominated diphenyl oxides and HBCD can provide similar or better MFT test times at equal or less total bromine required for HBCD alone. MFT test times of PBDPO, OBDPO or DBDPO alone demonstrated that none of these fire retardants are effective fire retardants by themselves.

**Table 2**

| Effect of PBDPO, OBDPO or DBDPO and HBCD | | | | | | |
|---|---|---|---|---|---|---|
| Combinations on FP-7 Test Results | | | | | | |
| SA# | PBDPO (parts) | HBCD % Br | Total % Br | MFT (sec) | DEV (sec) | Density (kg/m³) |
| 1 | 1.2 | 0.63 | 1.52 | 2.9 | 1.1 | 33.3 |
| 2 | 1.8 | 0.63 | 2.00 | 3.2 | 2.0 | 33.6 |
| 3 | 0.6 | 1.24 | 1.70 | 2.6 | 1.0 | 32.2 |
| 4 | 1.0 | 1.24 | 1.99 | 2.4 | 0.4 | 33.1 |
| 5 | 1.7 | -- | 1.28 | 14.1 | 6.6 | 32.8 |
| 6 | 2.9 | -- | 2.17 | 19.2 | 6.9 | 32.0 |

| | OBDPO | | | | | |
|---|---|---|---|---|---|---|
| 7 | 1.2 | 0.63 | 1.51 | 8.7 | 9.5 | 33.0 |
| 8 | 1.8 | 0.63 | 2.03 | 2.4 | 0.2 | 33.4 |
| 9 | 0.6 | 1.18 | 1.61 | 10.1 | 4.4 | 29.3 |
| 10 | 1.0 | 1.18 | 1.93 | 2.0 | 0.4 | 33.3 |
| 11 | 3.0 | -- | 2.23 | 18.3 | 9.2 | 33.3 |

| | DBDPO | | | | | |
|---|---|---|---|---|---|---|
| 12 | 1.2 | 0.63 | 1.52 | 3.2 | 1.4 | 32.6 |
| 13 | 1.8 | 0.63 | 1.96 | 3.4 | 1.4 | 32.3 |
| 14 | 0.6 | 1.24 | 1.78 | 2.2 | 0.5 | 32.8 |
| 15 | 1.0 | 1.24 | 1.99 | 2.1 | 0.6 | 32.5 |
| 16 | 1.5 | -- | 1.08 | 18.5 | 10.1 | 30.9 |
| 17 | 2.3 | -- | 1.67 | 16.0 | 9.2 | 29.4 |

These results are not intended to reflect the actual performance in a fire.

### Example IV

Following the procedure of Example I, formulations were prepared using as flame retardant additives a mixture of hexabromocyclododecane (HBCD) and tribromoneopentyl alcohol (TBPA) or tris(tribromoneopentyl) borate (TBPAB).

The purpose of this combination is to demonstrate that the low volatility of the second flame retardant component is essential to this invention. Tribromoneopentyl alcohol shows a 5 weight percent loss at 100°C and its borate ester at 170°C. The thermal stability of the bromine-carbon bond of either of the above flame retardants is about 100 times more stable than HBCD. Table 3 presents the results of the above-titled combinations. At 0.6 percent Br as HBCD, the tribromoneopentyl alcohol shows only a marginal effect on the MFT tests. This change could be related to increased plasticization of the foam by the flame retardant. Lowering the volatility by derivatizing the tribromoneopentyl alcohol (TBPA) to its borate esters (TBPAB) improves the MFT test times; compare Samples 18 and 26.

**Table 3**

| SA# | TBPA (parts) | HBCD % Br | Total % Br avg | MFT (sec) | S.D. (sec) | Density (kg/m³) |
|---|---|---|---|---|---|---|
| 18 | 1.5 | 0.6 | 1.59 | 18.7 | 8.5 | 26.6 |
| 19 | 2.0 | 0.6 | 2.10 | 8.8 | 4.3 | 28.5 |
| 20 | 0.7 | 1.2 | 1.71 | 3.0 | 0.9 | 31.0 |
| 21 | 1.0 | 1.2 | 1.94 | 2.3 | 0.7 | 30.6 |
| 22 | 1.0 | -- | 0.73 | 21.8 | 5.0 | 30.1 |
| 23 | 1.5 | -- | 1.12 | 14.3 | 7.2 | 31.4 |
| 24 | 2.5 | -- | 2.03 | 16.5 | 7.7 | 31.4 |

| | TBPAB | | | | | |
|---|---|---|---|---|---|---|
| 25 | 0.8 | 0.6 | 1.22 | 4.7 | 0.7 | 29.9 |
| 26 | 1.4 | 0.6 | 1.68 | 3.9 | 1.3 | 26.2 |

### Example V

Following the procedures of Example I, formulations were prepared employing hexabromocyclododecane (HBCD) and decabromodiphenyl oxide (DBDPO) in combination with a melt flow modifier, 2,2'-dimethyl-2,2'-diphenyl butane (DC).

Table 4 shows the increased thermal stability of the tertiary fire retardant system of 2,2'dimethyl-2,2'-diphenyl butane, HBCD and DBDPO over HBCD alone to achieve an acceptable ignition resistant-like property of polystyrene foam.

**Table 4**

| | FR System | | | | | | |
|---|---|---|---|---|---|---|---|
| SA# | DBDPO | HBCD | DC** | Weight % Br | Foam Dens. (kg/m³) | MW* (M) | MFT Times (secs)*** |
| 1 | -- | -- | -- | 0.00 | 35.2 | 183 | 25 |
| 2 | -- | 0.2 | -- | 0.18 | 38.1 | 183 | 21.4 |
| 3 | -- | 0.4 | -- | 0.41 | 39.7 | 181 | 15.2 |
| 4 | -- | 0.6 | -- | 0.55 | 38.4 | 179 | 12.4 |
| 5 | -- | 0.8 | -- | 0.81 | 38.7 | 178 | 10.5 |
| 6 | -- | 2.0 | -- | 2.08 | 39.2 | 169 | 6.2 |
| 7 | 2.0 | 0.3 | 0.2 | 1.98 | 35.4 | 185 | 3.8 |
| 8 | 2.0 | 0.3 | 0.5 | 1.92 | 37.4 | 185 | 2.9 |

| | | | | | | | |
|---|---|---|---|---|---|---|---|
| * Weight average molecular weight reported | | | | | | | |
| ** 2,2'-dimethyl-2,2'-diphenyl butane | | | | | | | |
| *** These test times do not reflect this product's performance in a real fire situation | | | | | | | |

Increasing the level of HBCD caused a loss of molecular weight of polystyrene which can be related to a loss of physical properties and increased corrosion in the process especially when the environmentally safe blowing agent water is used. The tertiary system showed no effect at all on the degradation of polystyrene while still maintaining acceptable fire retardant properties. The Starting molecular weight of the polystyrene was 193,000.

### Example VI

A copolymer of styrene and tribromoneopentyl acrylate was prepared by solution polymerizing 37 parts by weight styrene and 63 parts by weight tribromoneopentyl acrylate in 100 parts by weight toluene under vacuum in heavy wall glass ampoules. A film was cast from the reaction solution, allowed to dry and then devolatilized at 130°C for 24 hours. Polymer yield was 86 percent and bromine content was 22.7 percent by weight as determined by neutron activation. Average weight molecular weight and polydispersity were measured to be 197,500 and 3.07, respectively based on polystyrene. The copolymer has 5 weight percent and 10 weight percent TGA temperatures of 295°C and 315°C, respectively.

The poly(styrene/tribromoneopentyl acrylate) copolymer was mixed with hexabromocyclododecane to provide a flame retardant system for polystyrene. At 0.3 weight percent bromine from hexabromocyclododecane and 0.3 and 0.7 weight percent bromine from poly(styrene/tribromoneopentyl acrylate), modified tunnel test times of 6.5 sec and 5.0 sec were obtained, respectively.

## Claims

1. A method for enhancing the flame retardancy of a thermoplastic foam characterized by adding to 100 parts by weight of at least one alkenylaromatic thermoplastic homo-, co- and/or interpolymers prior to extrusion into a foam from 0.1 to 2 parts by weight bromine provided by at least one first brominated organic compound formed by at least one brominated aliphatic compound having at least one hydrogen atom attached to a carbon atom which is adjacent to a carbon atom containing at least one bromine atom and volatilizing at a temperature below 240°C, and 0.5 to 3 parts by weight bromine provided by a tetrahalophthalate ester, whereby the second brominated organic compound (i.e. the tetrahalophthalate eater) is more heat stable and less volatile than the first brominated organic compound.

2. The method according to Claim 1 wherein the second brominated organic compound provides 0.8 to 3 parts by weight bromine.

3. The method according to claim 1 wherein the second brominated organic compound provides 1.0 to 2.25 parts by weight bromine.

4. The method according to Claims 1, 2, or 3, wherein said flame retardant system has incorporated therein from 0.001 to 5 parts by weight of at least one melt flow promoter.

5. The method according to Claims 1, 2, or 3, wherein said first brominated organic compound comprises hexabromocyclododecane.

6. A fire-retardant thermoplastic foam obtainable from the method of any of the preceding claims.

## Patentansprüche

1. Verfahren zur Erhöhung der Flammhemmung eines thermoplastischen Schaumes, gekennzeichnet durch Zugabe zu 100 Gew.-Teilen von wenigstens einem alkenylaromatischen thermoplastischen Homo-, Co- und/oder Interpolymeren vor der Extrusion zu einem Schaum von 0,1 bis 2 Gew.-Teilen Brom, bereitgestellt durch wenigstens eine erste bromierte organische Verbindung, gebildet durch wenigstens eine bromierte aliphatische Verbindung, welche wenigstens ein Wasserstoffatom besitzt, das an ein Kohlenstoffatom gebunden ist, welches benachbart zu einem wenig-stens ein Bromatom aufweisenden Kohlenstoffatom ist, und sich bei einer Temperatur unterhalb 240° C verflüchtigt, und von 0,5 bis 3 Gew.-Teilen Brom, bereitgestellt durch einen Tetrahalogenphthalat-ester, wobei die zweite bromierte organische Verbindung (d. h. der Tetrahalogenphthalatester) hitzestabiler und weniger flüchtig als die erste bromierte organische Verbindung ist.

2. Verfahren nach Anspruch 1, worin die zweite bromierte organische Verbindung 0,8 bis 3 Gew.-Teile Brom bereitstellt.

3. Verfahren nach Anspruch 1, worin die zweite bromierte organische Verbindung 1,0 bis 2,25 Gew.-Teile Brom bereitstellt.

4. Verfahren nach den Ansprüchen 1, 2 oder 3, worin dieses flammhemmende System von 0,001 bis 5 Gew.-Teile wenigstens eines Fließfähigkeitsbeschleunigers hierin eingebaut hat.

5. Verfahren nach den Ansprüchen 1, 2 oder 3, worin diese erste bromierte organische Verbindung Hexabromcyclododecan umfaßt.

6. Flammhemmender thermoplastischer Schaum, erhältlich aus dem Verfahren eines der vorhergehenden Ansprüche.

## Revendications

1. Procédé pour améliorer les propriétés igniguges d'une mousse thermoplastique, caractérisé par le fait que l'on ajoute à 100 parties en poids d'au moins un homopolymère, copolymère et/ou interpolymère alcénylaromatique thermoplastique, avant extrusion sous forme de mousse, de 0,1 à 2 parties en poids de brome fourni par au moins un premier composé organique bromé formé par au moins un composé aliphatique bromé ayant au moins un atome d'hydrogène lié à un atome de carbone adjacent à un atome de carbone portant au moins un atome de brome et qui se volatilise à une température inférieure à 240 °C, et de 0,5 à 3 parties en poids de brome sous forme d'un ester de type tétrahalogénophtalate, le deuxième composé organique bromé (à savoir l'ester de type tétrahalogénophtalate) étant plus stable à la chaleur et moins volatil que le premier composé organique bromé.

2. Procédé selon la revendication 1 dans lequel le deuxième composé organique bromé fournit de 0,8 à 3 parties en poids de brome.

3. Procédé selon la revendication 1 dans lequel le deuxième composé organique bromé fournit de 1,0 à 2,25 parties en poids de brome.

4. Procédé selon les revendications 1, 2 ou 3 dans lequel ledit système ignifugeant contient de 0,001 à 5 parties en poids d'au moins un agent favorisant l'écoulement à l'état fondu.

5. Procédé selon les revendications 1, 2 ou 3 dans lequel ledit premier composé organique bromé est l'hexabromocyclododécane.

6. Mousse thermoplastique ignifuge que l'on peut obtenir par le procédé conforme à l'une quelconque des revendications précédentes.
